# DEMANDE DE BREVET EUROPEEN

(11) **EP 1 638 002 A2**
(43) Date de publication de la demande: **22.03.2006**
(21) Numéro de dépôt: 05291818.2
(22) Date de dépôt: 01.09.2005
(51) Int. Cl.: G06F 11/22

(54) **Dispositif et procédé de contrôle d'une console**

(30) Priorité: 15.09.2004 FR 0409788
(71) Demandeur: Alstom Transport S.A., 92300 Levallois-Perret (FR)
(72) Inventeur: Miglianico, Denis, 69100 Tassin-La-Demi-Lune (FR)
(74) Mandataire: Blot, Philippe Robert Emile

(57) **Abrégé**

L'invention concerne un dispositif de contrôle (3) destiné à tester une console (2) propre à traiter des commandes d'affichage.

Le dispositif de contrôle (3) comporte, dans un contenant séparé du contenant de la console (2) :
- des moyens de mémorisation (24) aptes à stocker des commandes d'affichage de test (DT) et un signal vidéo de test exact (DTE) ;
- des premiers moyens (32, 33, 34, 35, 36, 37) de connexion temporaire auxdits moyens de réception (16, 17, 18) de ladite console (2), aptes à transmettre les commandes d'affichage de test (DT) aux moyens de traitement (8, 10) de ladite console (2) ;
- des seconds moyens (42, 44) de connexion temporaire auxdits moyens d'émission (20) de la console (2), aptes à réceptionner le signal vidéo de test produit par les moyens de traitement (8, 10) de ladite console (2) ; et
- des moyens de comparaison (40) propres à comparer le signal vidéo de test produit au signal vidéo de test exact (DTE), et à générer un résultat représentatif du fonctionnement ou du dysfonctionnement des moyens de traitement (8, 10) de la console (2).

L'invention concerne également un procédé de contrôle d'une console.

## Description

L'invention concerne un dispositif de contrôle d'une console propre à traiter des commandes d'affichage et un procédé de contrôle d'une telle console.

L'invention concerne en particulier un dispositif de contrôle destiné à tester une console propre à traiter des commandes d'affichage, ladite console comportant des moyens de réception de commandes d'affichage, des moyens de traitement desdites commandes d'affichage réceptionnées et des moyens d'émission destinés à transmettre à un dispositif d'affichage le signal vidéo produit par les moyens de traitement.

L'invention s'applique au domaine des consoles destinées aux véhicules de traction ferroviaire. Ces véhicules comportent une console utilisée pour contrôler leur avancement, les équipements intégrés dans le véhicule et éventuellement les équipements de voie du réseau ferroviaire.

Cette console est connectée à un dispositif de saisie de caractères (clavier,...) et à un dispositif de pointage (souris, écran tactile, ...) pour adresser les instructions du conducteur à un réseau informatique de bord et à un écran d'affichage de ces instructions et informations pour recevoir des informations relatives au véhicule et à ses équipements. L'écran est piloté par la console à partir de commandes d'affichage.

Avant montage sur véhicule, il est nécessaire de s'assurer de l'absence d'erreur d'affichage sur cet écran. De telles erreurs d'affichage peuvent être causées soit par un dysfonctionnement de l'écran d'affichage, soit par la monopolisation de l'unité centrale de la console par le bouclage d'un programme, soit encore par des défaillances au niveau des mémoires servant au stockage des données à afficher, soit par tout autre incident matériel ou logiciel impactant le fonctionnement de la console 2.

Le bon fonctionnement de l'écran d'affichage est généralement directement vérifié par le constructeur de celui-ci.

Il est connu que le dysfonctionnement éventuel du traitement réalisé par la console est habituellement testé par un opérateur qui introduit des commandes d'affichage dans la console, par l'intermédiaire du dispositif de saisie de caractères et du dispositif de pointage, qui vérifie visuellement si l'affichage à l'écran correspond aux pictogrammes et textes attendus.

Toutefois, ces tests sont longs et demandent une attention soutenue de l'opérateur. De plus, ces tests comprennent des étapes d'attente obligatoires pour permettre la détection d'erreurs éventuelles.

Par ailleurs, il est connu des programmes de contrôle du traitement de la console destinés à être enregistrés dans des moyens de stockage de la console et propres à être exécutés directement par l'intermédiaire de l'unité centrale de la console elle-même (appelé aussi programme d'autotest).

Toutefois, ces programmes utilisent des moyens de traitement, de calcul et de mémorisation de la console sous test, de sorte que les résultats de ces tests ne sont pas fiables si la console elle-même fonctionne de manière anormale.

L'invention a pour but de fournir un dispositif de contrôle plus fiable.

A cet effet, l'invention a pour objet un dispositif de contrôle du type précité, caractérisé en ce qu'il comporte, dans un contenant séparé du contenant de la console :
- des moyens de mémorisation aptes à stocker des commandes d'affichage de test et un signal vidéo de test exact ;
- des premiers moyens de connexion temporaire auxdits moyens de réception de ladite console, aptes à transmettre les commandes d'affichage de test aux moyens de traitement de ladite console ;
- des seconds moyens de connexion temporaire auxdits moyens d'émission de la console, aptes à réceptionner le signal vidéo de test produit par les moyens de traitement de ladite console ; et
- des moyens de comparaison propres à comparer le signal vidéo de test produit au signal vidéo de test exact, et à générer un résultat représentatif du fonctionnement ou du dysfonctionnement des moyens de traitement de la console.

Suivant des modes particuliers de réalisation, le dispositif comporte l'une ou plusieurs des caractéristiques suivantes :
- les premiers moyens de connexion sont propres à être raccordés à au moins un port d'accès à un réseau informatique de bord de ladite console pour délivrer des commandes d'affichages de test de type image et de type caractère aux moyens de traitement de la console ;
- les premiers moyens de connexion sont aptes à être reliés à au moins un port d'entrée clavier de ladite console pour délivrer des commandes d'affichages de test de type caractère aux moyens de traitement de la console ;
- les premiers moyens de connexion sont aptes à être reliés à au moins un port d'entrée souris de ladite console pour délivrer des commandes d'affichages de test de type positionnement d'un curseur et/ou validation d'une image ou d'un caractère aux moyens de traitement de la console ;
- les seconds moyens de connexion sont adaptés pour être connectés à au moins un port de sortie vidéo de ladite console pour réceptionner le signal vidéo de test produit par les moyens de traitement de la console ;
- il comporte en outre une interface homme/machine de présentation du résultat généré par les moyens de comparaison ;
- il comporte en outre un convertisseur propre à convertir les commandes d'affichage de test d'un premier format propre au dispositif de contrôle en un second format interprétable par les moyens de réception de la console ;
- il comporte en outre un convertisseur propre à convertir le signal vidéo de test produit réceptionné par les seconds moyens de connexion en informations numériques ; et
- des composants électroniques formant les moyens de mémorisation et les moyens de comparaison du dispositif de contrôle sont distincts et séparés des composants électroniques formant les moyens de traitement de la console.

L'invention a également pour objet un procédé de contrôle d'une console de traitement de commandes d'affichage par un dispositif de contrôle, caractérisé en ce qu'il comporte les étapes suivantes :
- émission par des premiers moyens de connexion du dispositif de contrôle de commandes d'affichage de test vers des moyens de réception de ladite console ;
- traitement des commandes d'affichage de test par des moyens de traitement de la console ;
- réception par des seconds moyens de connexion du dispositif de contrôle, d'un signal vidéo de test produit transmis par des moyens d'émission de ladite console ;
- comparaison du signal vidéo de test produit au signal vidéo de test exact par des moyens de comparaison du dispositif de contrôle ; et
- présentation d'un résultat représentatif du fonctionnement ou du dysfonctionnement des moyens de traitement de la console sur une interface homme/machine du dispositif de contrôle à partir du résultat de la comparaison.

L'invention sera mieux comprise à la lecture de la description qui va suivre, donnée uniquement à titre d'exemple et faite en se référant aux dessins annexés, sur lesquels :
- la Fig.1 est une vue schématique d'une console et d'un dispositif de contrôle selon l'invention ; et

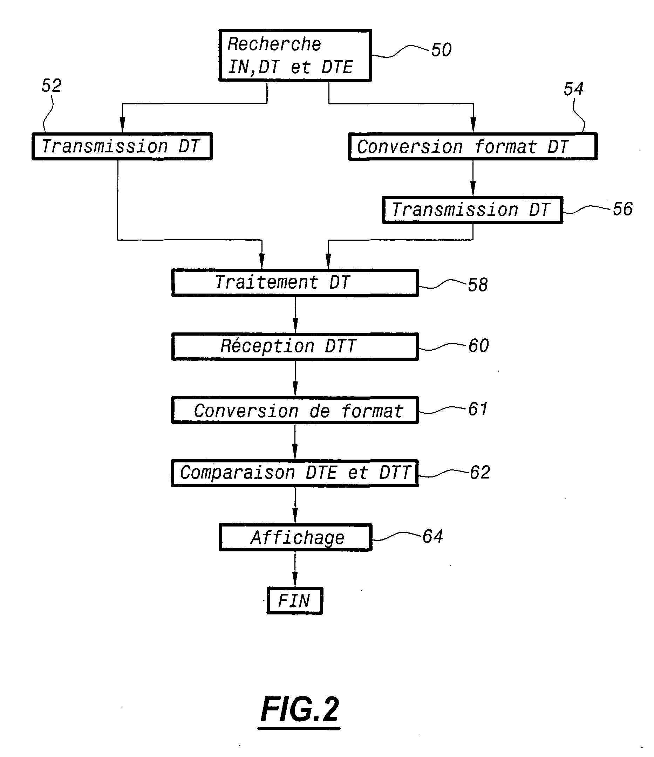

- la Fig.2 est un diagramme illustrant le procédé de contrôle selon l'invention.

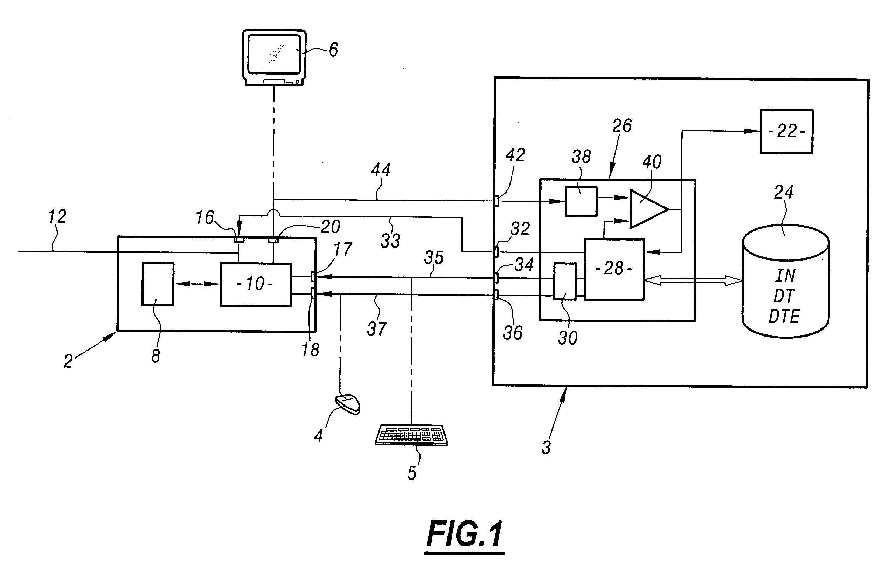

Une console 2 et un dispositif de contrôle 3 sont illustrés schématiquement sur la figure 1. Dans l'exemple de réalisation de l'invention décrit, la console 2 est destinée au véhicule de traction ferroviaire. Lors de son fonctionnement ordinaire, cette console 2 est raccordée à une souris 4, à un clavier 5 et à un dispositif d'affichage 6. Lors d'une opération de contrôle de la console, celle-ci est raccordée à un dispositif de contrôle 3, tel que représenté sur la figure 1.

La console 2 est propre à traiter des commandes d'affichage et comporte à cet effet notamment une mémoire de stockage 8 reliée à une unité centrale 10, constituée par un microprocesseur.

La mémoire de stockage 8 est adaptée pour stocker, dans une base de données, des images, des pictogrammes et des caractères ou des chaînes de caractères préenregistrés et identifiés par des commandes d'affichage. Ces pictogrammes et ces caractères illustrent des états de fonctionnement du véhicule de traction et de ses équipements.

Lors de son fonctionnement ordinaire, l'unité centrale 10 est apte à recevoir des commandes d'affichage par l'intermédiaire d'un réseau 12 informatique de bord, de la souris 4 et du clavier 5, à les traiter, notamment à rechercher les images, les pictogrammes et les caractères ou les chaînes de caractères, identifiés par ces commandes d'affichage, dans la mémoire 8, et à délivrer au dispositif d'affichage 6 des données traitées, formant un signal vidéo, dénommé ci-après signal vidéo produit. L'unité centrale peut également mémoriser des événements, déclencher des alarmes en fonction des informations reçues par le réseau ou par le clavier.

L'unité centrale 10 est connectée au réseau 12 informatique de bord du véhicule pour recevoir également des paramètres de fonctionnement du véhicule de traction et des équipements électriques de ce véhicule, tels que par exemple sa vitesse, son accélération, etc.... Le réseau 12 est un réseau de type ETHERNET, CAN (Controller Array Network) LON (Local Operating Network), MVB (Multifunction Vehicle Bus), FIP (Factory Industrial Protocol). Le réseau 12 comporte un port d'accès 16 permettant de délivrer des commandes d'affichage à l'unité centrale 10.

L'unité centrale 10 est également reliée à un port d'entrée clavier 17 et à un port d'entrée souris 18, intégrés à la console 2. Les ports d'entrée clavier 17 et souris 18 sont destinés à être raccordés au clavier 5 et à la souris 4 respectivement pour recevoir lors de son fonctionnement classique des commandes d'affichage de l'utilisateur de la console. Ces commandes d'affichage sont de type positionnement du curseur, validation d'une information ou affichage d'un caractère ou d'une chaîne de caractères.

L'unité centrale 10 est également connectée à un port de sortie vidéo 20 destiné à être raccordé au dispositif d'affichage 6 pour transmettre le signal vidéo produit par l'unité centrale 10. Le signal vidéo produit est un signal vidéo analogique de type XGA, VGA, SXGA, SVGA, UXGA ou un signal vidéo numérique de type LVDS. (XGA : eXtended Graphics Array ; VGA : Video Graphics Array ; SVGA : Super Video Graphics Array ; SXGA : Super eXtended Graphics Array ; UXGA : Ultra Extended Graphics Array).

Le dispositif de contrôle 3 selon l'invention est propre à vérifier le traitement des commandes d'affichage réalisé par la console 2. Il est distinct, séparé et indépendant de la console 2. Il est connecté à celle-ci uniquement au cours du procédé de test de celle-ci.

Il comprend une interface homme-machine 22, une base de données 24 et des moyens de test 26.

L'interface homme-machine 22 est propre à présenter les résultats des tests effectués par les moyens de test 26. Elle est par exemple, constituée par un écran d'affichage ou un dispositif d'impression.

La base de données 24 comporte des instructions IN récapitulatives des étapes de déroulement des tests, des commandes d'affichage de test DT et un signal vidéo de test exact DTE.

Les commandes d'affichage de test DT comprennent des informations de type image, de type caractère et de type positionnement d'un curseur ou validation d'une image ou d'un caractère affiché. Elles sont propres à être envoyées à l'unité centrale 10 de la console pour tester le fonctionnement de celle-ci. Les commandes d'affichage de test DT sont dans des formats prédéterminés exploitables directement par les entrées 16, 17, 18 de la console 2, tel que par exemple le format RS 232.

Le signal vidéo de test exact DTE est un signal vidéo de test correct, autrement dit un signal vidéo produit par une console 2 ne présentant aucun dysfonctionnement et aucun défaut. Chaque signal vidéo de test exact DTE est associé à une ou une suite de commandes d'affichage de test DT.

Les moyens de test 26 sont propres à tester le traitement des commandes DT réalisé par l'unité centrale 10 de la console. Ils sont constitués par un microprocesseur et des programmes adaptés et, sont reliés à la base de données 24. Ils comportent une unité de calcul 28 et une unité de conversion 30.

L'unité de calcul 28 est apte à rechercher dans la base de données 24, les instructions IN, les commandes d'affichage de test DT et le signal vidéo de test exact DTE correspondant à ces commandes d'affichage de test DT. Elle est adaptée pour appliquer les instructions IN et notamment pour sélectionner un port de la console, à savoir le port 16, 17 ou 18 en fonction des instructions IN.

A cet effet, le dispositif de contrôle 3 comporte trois connecteurs de sorties 32, 34, 36.

En particulier, l'unité de calcul 28 est propre à envoyer des commandes d'affichage de test DT de type image ou de type caractère, à l'unité centrale 10, par l'intermédiaire du connecteur 32, raccordé au cours du test, au port d'accès 16 de la console, par un câble 33.

L'unité de calcul 28 est également adaptée pour envoyer des commandes DT de type caractère à l'unité centrale 10 par l'intermédiaire du connecteur 34 raccordé, au cours du test, par un câble 35, au port d'entrée clavier 17 de la console.

Enfin, l'unité de calcul 28 est apte à envoyer des commandes DT de type positionnement d'un curseur et validation d'une image ou d'un caractère à l'unité centrale 10, par l'intermédiaire du connecteur 36 raccordé, au cours du test, par un câble 37, au port d'entrée souris 18 de la console.

Elle est propre à piloter des séries de test comportant plusieurs tests successifs dont la succession dépend du résultat des tests précédents, ceci en fonction des instructions IN.

L'unité de conversion 30 est reliée à l'unité de calcul 28 et aux connecteurs 34 et 36, pour convertir les commandes d'affichage de test DT dans un format lisible par la console 2. Ce format est fonction de la nature de la console testée. L'unité 30 est apte à convertir les commandes DT par exemple d'un format RS232 à un format USB (USB : Universal Serial Bus) ou PS/2 (PS2 : Personal System /2) et/ou d'un format USB à un format PS/2.

Les moyens de test 26 comportent en outre un convertisseur de type carte 38 d'acquisition et de conversion de signaux vidéo, connectée en sortie à des moyens de comparaison 40.

La carte 38 est reliée en entrée à un connecteur 42 du dispositif 3 raccordé au cours du test, au port de sortie vidéo 20 de la console, par un câble 44 pour recevoir le signal vidéo de test produit DTT par l'unité centrale 10.

La carte 38 est propre à transformer ce signal produit DTT, d'un format vidéo en un format lisible par les moyens de comparaison 40.

Les moyens de comparaison 40 sont adaptés pour comparer le signal vidéo de test produit DTT communiqué par les moyens de comparaison 40, au signal vidéo de test exact DTE communiqué par l'unité de calcul 28 et correspondant aux commandes d'affichage de test DT envoyées à l'unité centrale 10 de la console.

Les moyens de comparaison 40 sont aptes à générer en sortie un résultat représentatif du fonctionnement ou du dysfonctionnement du traitement des commandes DT réalisé par la console.

Les moyens de comparaison 40 sont adaptés pour transmettre ce résultat à l'interface homme-machine 22 et à l'unité de calcul 28.

En fonctionnement, au cours d'une étape 50, l'unité de calcul 28 du dispositif de contrôle recherche dans la base de données 24, les instructions IN, les commandes d'affichage de test DT et le signal vidéo de test exact DTE.

Puis, l'unité 28 réalise les étapes 52 et 58 à 64 ou les étapes 54, 56 et 58 à 64 en fonction des instructions IN du test à effectuer.

Lorsque l'unité 28 réalise l'étape 52, elle transmet les commandes d'affichage de test DT, de type image ou de type caractère, à l'unité centrale 10 de la console, par l'intermédiaire du connecteur 32 raccordé au port d'accès 16 de la console, par le câble 33.

Lorsque l'unité 28 effectue les étapes 54 et 56, elle envoie les commandes DT de type caractère, position d'un curseur ou validation d'une information affichée, à l'unité de conversion 30 au cours de l'étape 54. Celle-ci convertit les commandes DT par exemple du format RS232 à un format PS/2.

Au cours d'une étape 56, l'unité de conversion 30 transmet ces commandes DT à l'unité centrale 10, par l'intermédiaire du connecteur 34 ou 36, raccordé au port d'entrée souris 18 ou port d'entrée clavier 17, par le câble 35 ou 37, respectivement.

Au cours d'une étape 58, l'unité centrale 10 de la console réceptionne les commandes DT, les traite, notamment recherche dans la mémoire 8, l'image, le caractère ou la chaîne de caractères correspondant à ces commandes DT et transmet le signal vidéo de test produit DTT sous format vidéo au port de sortie 20.

Au cours d'une étape 60, le connecteur 42 du dispositif de contrôle réceptionne le signal vidéo de test produit DTT transmis par l'unité centrale 10 au port de sortie vidéo 20, par l'intermédiaire du câble 44 raccordé au port 20 et au connecteur 42.

Au cours d'une étape 61, la carte 38 d'acquisition et de conversion traite ce signal en le transformant en un ensemble d'informations numériques dépendant de la définition de l'écran. Une définition typique est de 640 lignes par 480 colonnes pour le rendre lisible par les moyens de comparaison 40

Au cours d'une étape 62, l'unité de calcul 28 transmet le signal vidéo de test exact DTE recherché au cours de l'étape 60, à une entrée des moyens de comparaison 40. La carte 38 transmet le signal vidéo de test produit DTT à l'autre entrée des moyens de comparaison 40. Les moyens de comparaison 40 comparent alors le signal vidéo de test exact DTE au signal vidéo de test produit DTT et transmettent le résultat de cette comparaison à l'unité 28 et à l'interface homme-machine 22.

Au cours d'une étape 64, l'interface homme-machine 22 affiche le résultat de cette comparaison.

Lorsque le signal vidéo de test exact DTE ne correspond pas au signal vidéo de test produit DTT, le résultat est représentatif de ce dysfonctionnement.

Lorsque ces commandes coïncident, le résultat affiché est représentatif du traitement correct des commandes DT, par l'unité centrale 10.

Lorsque cette opération est réalisée, soit le test s'arrête, soit le test se poursuit par la reprise des étapes 52, 58 à 64 ou par la reprise des étapes 54 à 64. Par exemple, un test peut comprendre une opération au cours de laquelle « un pictogramme de défaut » est affiché puis une opération au cours de laquelle ce pictogramme est déplacé puis, validé.

L'utilisation d'un dispositif de contrôle indépendant de la console à contrôler, permet d'obtenir des résultats de test plus fiables, c'est-à-dire des résultats plus proches de ceux obtenus lors d'un fonctionnement réel de la console, car il n'y a aucune interférence entre les moyens permettant de réaliser les tests (moyens de test 26) et les moyens de traitement des commandes d'affichage (moyens de traitement 8, 10).

Comme les commandes d'affichage de test DT et le signal vidéo de test exact DTE sont enregistrés dans une base de données 24, indépendante et séparée de la mémoire 8, la capacité de cette dernière n'a pas besoin d'être augmentée. De même, comme les moyens de comparaison 40 ne sont pas compris dans l'unité centrale 10, la capacité de cette dernière n'a pas besoin d'être augmentée.

Aucune commande de test DT ne reste enregistrée dans la mémoire 8 de la console.

Le dispositif de contrôle selon l'invention est propre à tenir compte et à tester de façon interactive la console, par exemple un pictogramme affiché au cour d'un premier test peut être sélectionné, déplacé et validé au cours des tests suivants.

Le signal vidéo de test produit DTT est réceptionné directement au port de sortie vidéo 20 de la console, de sorte qu'ils n'est pas altéré. En effet, dans les systèmes de contrôle utilisant une caméra vidéo filmant le dispositif d'affichage et un logiciel de reconnaissance de forme qui analyse les images filmées, ces images sont généralement détériorées par exemple par un éclairage non uniforme.

## Revendications

1. Dispositif de contrôle (3) destiné à tester une console (2) propre à traiter des commandes d'affichage, ladite console (2) comportant des moyens de réception (16, 17, 18) de commandes d'affichage, des moyens de traitement (8, 10) desdites commandes d'affichage réceptionnées et des moyens d'émission (20) destinés à transmettre à un dispositif d'affichage (6) le signal vidéo produit par les moyens de traitement (8, 10), **caractérisé en ce que** le dispositif de contrôle (3) comporte, dans un contenant séparé du contenant de la console (2) ;
- des moyens de mémorisation (24) aptes à stocker des commandes d'affichage de test (DT) et un signal vidéo de test exact (DTE) ;
- des premiers moyens (32, 33, 34, 35, 36, 37) de connexion temporaire auxdits moyens de réception (16, 17, 18) de ladite console (2), aptes à transmettre les commandes d'affichage de test (DT) aux moyens de traitement (8, 10) de ladite console (2) ;
- des seconds moyens (42, 44) de connexion temporaire auxdits moyens d'émission (20) de la console (2), aptes à réceptionner le signal vidéo de test produit (DTT) par les moyens de traitement (8, 10) de ladite console (2) ; et
- des moyens de comparaison (40) propres à comparer le signal vidéo de test produit (DTT) au signal vidéo de test exact (DTE), et à générer un résultat représentatif du fonctionnement ou du dysfonctionnement des moyens de traitement (8, 10) de la console (2).

2. Dispositif selon la revendication 1, **caractérisé en ce que** les premiers moyens de connexion (32, 33, 34, 35, 36, 37) sont propres à être raccordés à au moins un port (16) d'accès à un réseau (12) informatique de bord de ladite console (2) pour délivrer des commandes d'affichages de test (DT) de type image et de type caractère aux moyens de traitement (8, 10) de la console (2).

3. Dispositif selon l'une quelconque des revendications 1 et 2, **caractérisé en ce que** les premiers moyens de connexion (32, 33, 34, 35, 36, 37) sont aptes à être reliés à au moins un port (17) d'entrée clavier de ladite console (2) pour délivrer des commandes d'affichages de test (DT) de type caractère aux moyens de traitement (8, 10) de la console (2).

4. Dispositif selon l'une quelconque des revendications précédentes, **caractérisé en ce que** les premiers moyens de connexion (32, 33, 34, 35, 36, 37) sont aptes à être reliés à au moins un port (18) d'entrée souris de ladite console (2) pour délivrer des commandes d'affichages de test (DT) de type positionnement d'un curseur et/ou validation d'une image ou d'un caractère aux moyens de traitement (8, 10) de la console (2).

5. Dispositif selon l'une quelconque des revendications précédentes, **caractérisé en ce que** les seconds moyens de connexion (42, 44) sont adaptés pour être connectés à au moins un port (20) de sortie vidéo de ladite console (2) pour réceptionner le signal vidéo de test produit (DTT) par les moyens de traitement (8, 10) de la console (2).

6. Dispositif selon l'une quelconque des revendications précédentes, **caractérisé en ce qu'**il comporte en outre une interface homme/machine (22) de présentation du résultat généré par les moyens de comparaison (40).

7. Dispositif selon l'une quelconque des revendications précédentes, **caractérisé en ce qu'**il comporte en outre un convertisseur (30) propre à convertir les commandes d'affichage de test (DT) d'un premier format propre au dispositif de contrôle (3) en un second format interprétable par les moyens de réception (17, 18) de la console (2).

8. Dispositif selon l'une quelconque des revendications précédentes **caractérisée en ce qu'**il comporte en outre un convertisseur (38) propre à convertir le signal vidéo de test produit (DTT) réceptionné par les seconds moyens de connexion (42, 44) en informations numériques.

9. Dispositif selon l'une quelconque des revendications précédentes, **caractérisé en ce que** des composants électroniques formant les moyens de mémorisation (24) et les moyens de comparaison (40) du dispositif de contrôle (3) sont distincts et séparés des composants électroniques formant les moyens de traitement (8, 10) de la console (2).

10. Procédé de contrôle d'une console de traitement de commandes d'affichage par un dispositif de contrôle, **caractérisé en ce qu'**il comporte les étapes suivantes :
- émission (52, 56) par des premiers moyens de connexion (32, 33, 34, 35, 36, 37) du dispositif de contrôle (3) de commandes d'affichage de test (DT) vers des moyens de réception (16, 17, 18) de ladite console (2) ;
- traitement (58) des commandes d'affichage de test (DT) par des moyens de traitement (8, 10) de la console (2) ;
- réception (60) par des seconds moyens de connexion (42, 44) du dispositif de contrôle (3), d'un signal vidéo de test produit (DTT) transmis par des moyens d'émission (20) de ladite console (2) ;
- comparaison (62) du signal vidéo de test produit (DTT) au signal vidéo de test exact (DTE) par des moyens de comparaison (40) du dispositif de contrôle (3) ; et
- présentation (64) d'un résultat représentatif du fonctionnement ou du dysfonctionnement des moyens de traitement (8, 10) de la console (2) sur une interface homme/machine (22) du dispositif de contrôle (3) à partir du résultat de la comparaison.
